# EUROPEAN PATENT APPLICATION

(11) **EP 4 624 885 A1**
(43) Date of publication of application: **01.10.2025**
(21) Application number: 23894291.6
(22) Date of filing: 13.10.2023
(51) Int. Cl.: G01L 5/00

(54) **INFORMATION PROCESSING DEVICE, INFORMATION PROCESSING METHOD, AND INFORMATION PROCESSING PROGRAM**

(30) Priority: 25.11.2022 JP 2022188553
(71) Applicant: FUJIFILM Corporation, Tokyo 106-8620 (JP)
(72) Inventor: OMOTO, Makoto, Tokyo 106-8620 (JP)
(74) Representative: Meissner Bolte Partnerschaft mbB
(86) International application number: PCT/JP2023/037298
(87) International publication number: WO 2024/111279

(57) **Abstract**

An information processing apparatus acquires a first energy distribution measured by a first measurement member capable of measuring an integrated value of an amount of energy after application of energy to an object is ended, acquires time-series data of a second energy distribution measured by a second measurement member capable of measuring the amount of energy at a plurality of points in time during a period from a start to an end of the application of the energy to the object, and performs predetermined processing using the first energy distribution and the time-series data.

## Description

### BACKGROUND OF THE INVENTION

### Technical Field

The present disclosure relates to an information processing apparatus, an information processing method, and an information processing program.

### Related Art

In the related art, various techniques of measuring energy (for example, pressure, heat, and ultraviolet rays) applied to a surface are known.

First, a technique is known in which a color forming member that forms a color according to an amount of energy in a case where energy is applied thereto is used to measure the amount of energy. An example of such a color forming member includes PRESCALE (registered trademark) (manufactured by FUJIFILM Corporation) with which a color optical density in accordance with applied pressure is obtainable. For example, WO2021/235364A discloses a technique in which a pressure measurement sheet (for example, PRESCALE) is disposed on a calibration sheet to be imaged, a density, size, distortion, and shape of a captured image are corrected based on the calibration sheet included in the captured image, and a density value of the pressure measurement sheet included in an image after the correction is converted into a pressure value.

Second, a sensor device is known in which an electric signal according to pressure or the like is output by a sensor element that detects pressure or the like. For example, JP2020-123119A discloses a sensor device comprising a sensing unit that is disposed on a substrate and includes a sensor element detecting at least one of pressure or temperature and a storage unit that stores calibration data of the sensor element.

### SUMMARY

An object of the present disclosure is to provide an information processing apparatus, an information processing method, and an information processing program that can effectively use information on an amount of energy applied to an object.

According to a first aspect, an information processing apparatus comprises at least one processor, in which the processor is configured to acquire a first energy distribution measured by a first measurement member capable of measuring an integrated value of an amount of energy applied to an object after application of energy to the object is ended, acquire time-series data of a second energy distribution measured by a second measurement member capable of measuring the amount of energy at a plurality of points in time during a period from a start to an end of the application of the energy to the object, and perform predetermined processing using the first energy distribution and the time-series data.

According to the present disclosure, it is possible to effectively use the information on the amount of energy applied to the object.

### BRIEF DESCRIPTION OF THE DRAWINGS

Fig. 1 is a block diagram showing an example of a schematic configuration of an information processing system.
Fig. 2 is a diagram showing an example of a schematic configuration of a tactile sensor.
Fig. 3 is a block diagram showing an example of a hardware configuration of an information processing apparatus.
Fig. 4 is a graph showing an example of characteristic data.
Fig. 5 is a graph showing an example of an input profile.
Fig. 6 is a block diagram showing an example of a functional configuration of the information processing apparatus.
Fig. 7 is a diagram for describing a correction process of a pressure distribution.
Fig. 8 is a graph for describing a derivation process of a new input profile.
Fig. 9 is a graph for describing the derivation process of a new input profile.
Fig. 10 is a diagram showing an example of a display screen of time-series data of the pressure distribution.
Fig. 11 is a flowchart showing an example of pressure measurement processing.
Fig. 12 is a graph for describing the correction process of the pressure distribution.
Fig. 13 is a diagram showing an example of the display screen of the time-series data of the pressure distribution.

### DETAILED DESCRIPTION

Hereinafter, embodiments for implementing the technique of the present disclosure will be described in detail with reference to drawings. In the present embodiment, an example will be described in which pressure is employed as energy to be applied to an object. Examples of the object to be pressurized include a plate-shaped metal and a semiconductor wafer.

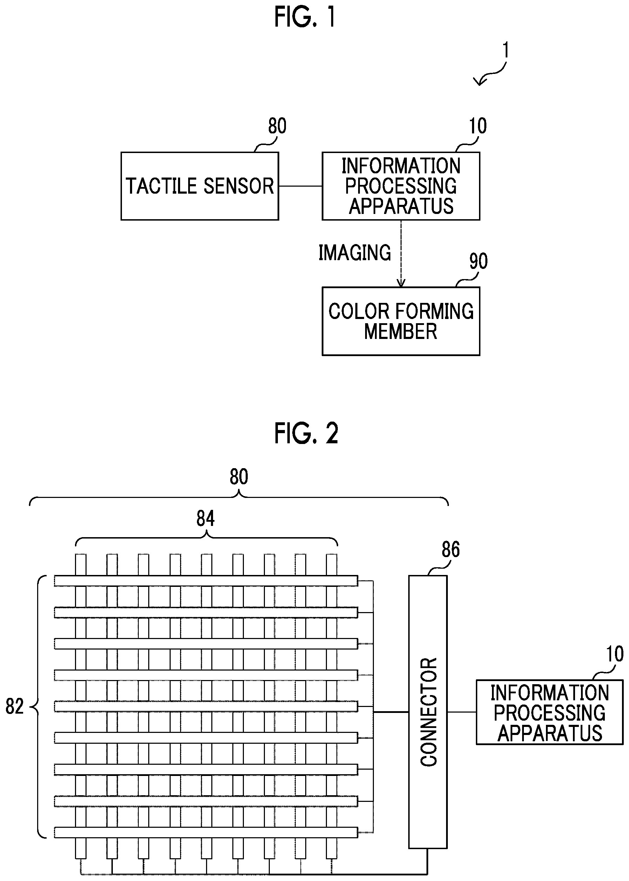

First, a configuration of an information processing system 1 according to the present embodiment will be described with reference to Fig. 1. As shown in Fig. 1, the information processing system 1 includes an information processing apparatus 10 and a tactile sensor 80. An example of the information processing apparatus 10 includes a portable computer such as a smartphone or a tablet terminal. The information processing apparatus 10 may be a stationary computer.

The tactile sensor 80 is an example of a sensor device that outputs an electric signal in accordance with the pressure applied thereto. Fig. 2 is a diagram showing a schematic configuration of the tactile sensor 80. The tactile sensor 80 comprises a plurality of first electrodes 82 extending in a first direction, a plurality of second electrodes 84 extending in a second direction intersecting the first direction, and a connector 86. The plurality of first electrodes 82 and the plurality of second electrodes 84 are disposed on a sheet-shaped substrate (not shown). Further, pressure-sensitive members (not shown) are laminated on the plurality of first electrodes 82 and the plurality of second electrodes 84 to cover each of the first electrodes 82 and the second electrodes 84.

As shown in Fig. 2, the plurality of first electrodes 82 and the plurality of second electrodes 84 are arranged in a lattice shape as viewed in a plan view and overlap with each other at lattice intersection positions. The first electrode 82 and the second electrode 84 that overlap with each other at each intersection configure a sensor element that detects the pressure applied to a position of the intersection. Specifically, in a case where the pressure is applied to the tactile sensor 80, a state of contact between the first electrode 82 and the second electrode 84 at the position to which the pressure is applied is changed, which causes a change in electric resistance value. Therefore, with measurement of the electrical resistance value of each sensor element, it is possible to detect the pressure applied to each sensor element. That is, the tactile sensor 80 includes a plurality of sensor elements, each of which detects pressure applied thereto, and detects a pressure distribution with the plurality of sensor elements.

Each of the plurality of first electrodes 82 and the plurality of second electrodes 84 is connected to the connector 86. The connector 86 and the information processing apparatus 10 are connected to each other via wired or wireless communication. The connector 86 orderly applies a voltage to the first electrodes 82 and the second electrodes 84 to measure the electric resistance value of each sensor element and transmit the electric signal according to the electric resistance value to the information processing apparatus 10.

As described above, in the present embodiment, an example has been described in which the pressure resistance type tactile sensor is employed as the tactile sensor 80, but the type for measuring the pressure of the tactile sensor 80 is not limited to the pressure resistance type. The type for measuring the pressure of the tactile sensor 80 may be any one of a capacitance type, a pressure-sensitive fiber, or a pressure-sensitive rubber type, or may be a combination of a plurality of types of the pressure resistance type, the capacitance type, the pressure-sensitive fiber, and the pressure-sensitive rubber type.

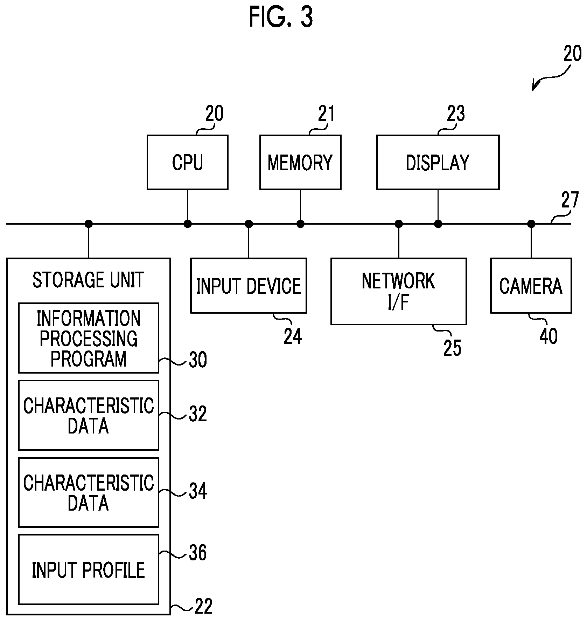

The information processing system 1 measures an amount of energy using a color forming member 90 that forms a color with a density distribution according to the amount of energy applied in a case where the energy (pressure in the present embodiment) is applied. Specifically, the information processing apparatus 10 images the color forming member 90 in a state of forming a color with the energy applied thereto, by using a camera 40 (refer to Fig. 3), and derives the amount of energy applied to the color forming member 90 from a captured image.

As the color forming member 90, it is possible to employ PRESCALE (registered trademark) (manufactured by FUJIFILM Corporation) with which a color optical density in accordance with applied pressure is obtainable. The PRESCALE is obtained by coating a color former including microcapsules in which colorless dye is included and a color developer to a sheet-shaped support. In a case where pressure is applied to the PRESCALE, the microcapsule is broken and the colorless dye is adsorbed to the color developer to form a color. Further, since the color former contains a plurality of types of microcapsules having different sizes and strengths, the number of microcapsules that are broken according to the applied pressure is different, and thus the color optical density is also different. Therefore, with observation of the color optical density, it is possible to measure magnitude of the pressure applied to the PRESCALE, pressure distribution, and the like.

A degree of permeation of the color former into the color developer is affected not only by a pressure value but also by a length of a period during which the pressure is applied. That is, the color optical density of the color forming member 90 is an integrated value of the applied pressure. The color forming member 90 is an example of a first measurement member that can measure the integrated value of the amount of energy after the application of the energy to the object ends, according to the technique of the disclosure.

On the other hand, the tactile sensor 80 can continuously output the electric signal according to the applied pressure. That is, the tactile sensor 80 can measure pressure values at a plurality of points in time in a period (hereinafter referred to as "pressurization period") from a start of the application of the pressure to the object to an end of the application of the pressure thereto. The tactile sensor 80 is an example of a second measurement member that can measure the amount of energy at a plurality of points in time in a period from a start of the application of the energy to the object to an end of the application of the energy thereto, according to the technique of the disclosure.

For example, the object, the tactile sensor 80, and the color forming member 90 are disposed in a laminated manner. Accordingly, the pressure applied to the object is measured by the tactile sensor 80 and the color forming member 90. That is, a common pressure is applied to the tactile sensor 80 and the color forming member 90.

Further, in the present embodiment, a resolution of the color forming member 90 is higher than a surface resolution of the tactile sensor 80. The resolution of the color forming member 90 and the surface resolution of the tactile sensor 80 are represented by a minimum area in which the pressure can be measured. For example, it is assumed that the color forming member 90 can measure the pressure applied to a point having an area of 0.125 mm², and the tactile sensor 80 can measure the pressure applied to a point having an area of 1 mm². In this case, the color forming member 90 can measure the pressures at eight points at one point where the tactile sensor 80 can measure the pressure. That is, in the present embodiment, the color forming member 90 can measure the pressure distribution finer than the tactile sensor 80.

Next, a hardware configuration of the information processing apparatus 10 according to the present embodiment will be described with reference to Fig. 3. As shown in Fig. 3, the information processing apparatus 10 includes a central processing unit (CPU) 20, a memory 21 as a temporary storage area, and a nonvolatile storage unit 22. Further, the information processing apparatus 10 includes a display 23 such as a liquid crystal display, an input device 24 such as a keyboard and a mouse, a network interface (I/F) 25 connected to a network, and the camera 40. The CPU 20, the memory 21, the storage unit 22, the display 23, the input device 24, the network I/F 25, and the camera 40 are connected to a bus 27. The CPU 20 is an example of a processor.

The storage unit 22 is formed of a hard disk drive (HDD), a solid state drive (SSD), a flash memory, or the like. The storage unit 22 as a storage medium stores an information processing program 30. The CPU 20 reads out the information processing program 30 from the storage unit 22, develops the information processing program 30 into the memory 21, and executes the developed information processing program 30.

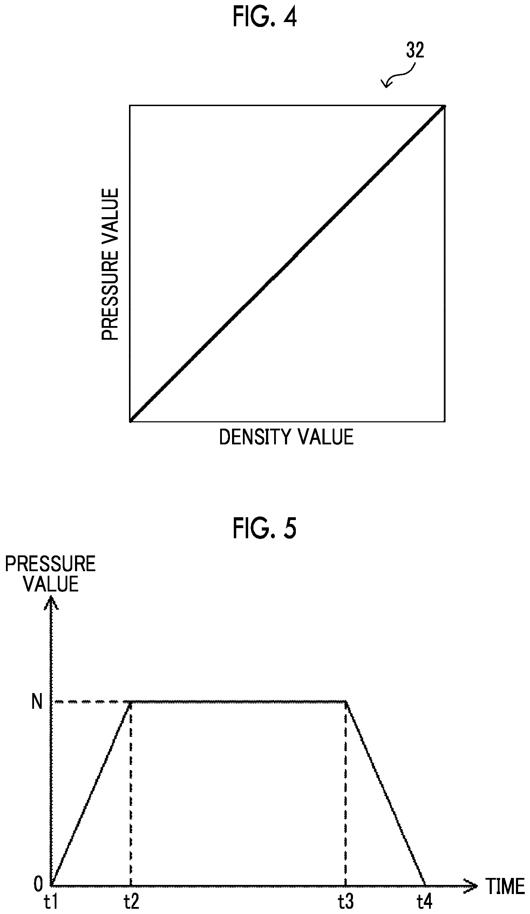

Further, the storage unit 22 stores characteristic data 32 and characteristic data 34. Fig. 4 shows an example of the characteristic data 32. In the characteristic data 32, a relationship between the amount of energy, which is applied to the color forming member 90, (pressure value in the present embodiment) and the density of the color forming member 90, which is included in the image obtained by imaging the color forming member 90, is predetermined. As the amount of energy, for example, a physical quantity according to energy that can be measured by using the color forming member 90, such as the pressure value, can be employed as appropriate. Although the pressure value and a density value are proportional to each other in Fig. 4, a relationship between the pressure value and the density value may not be proportional.

In the characteristic data 34, similarly to the characteristic data 32, a relationship between the amount of energy, which is applied to the tactile sensor 80, and a numerical value, which represents a signal level of the electric signal output from the tactile sensor 80, is predetermined.

Further, the storage unit 22 stores an input profile 36. The input profile 36 is input to a pressurization device that applies the pressure to the object. The pressurization device applies the pressure to the object in accordance with the input profile 36. As shown in Fig. 5 as an example, the input profile 36 according to the present embodiment is time-series data of the pressure value applied to the object. The example of Fig. 5 shows the input profile 36 in which the pressure value is linearly increased from 0 to N from a pressurization start point in time t1 to a point in time t2, the pressure value is maintained at N from the point in time t2 to a point in time t3, and the pressure value is linearly decreased from N to 0 from the point in time t3 to a pressurization end point in time t4. The input profile 36 can also be referred to as the time-series data of a target pressure value.

The camera 40 comprises an image sensor such as a charge coupled device (CCD) image sensor or a complementary metal oxide semiconductor (CMOS) image sensor. The camera 40 images the color forming member 90 and outputs image data obtained by the imaging to the CPU 20.

By the way, the tactile sensor 80 can measure the pressure distribution at the plurality of points in time in the pressurization period, that is, the time-series data of the pressure distribution, as described above. However, in the tactile sensor 80, the pressure distribution may not be accurately obtained due to a variation in sensitivity of each sensor element, hysteresis characteristics, and the like.

On the other hand, the color forming member 90 can measure the pressure distribution with high accuracy as compared with the tactile sensor 80. However, in the color forming member 90, integrated data of the pressure distribution can be measured after the pressurization against the object ends, but the time-series data of the pressure distribution cannot be measured.

For this reason, the information processing apparatus 10 according to the present embodiment performs processing using the time-series data of the pressure distribution measured by the tactile sensor 80 and the pressure distribution measured by the color forming member 90.

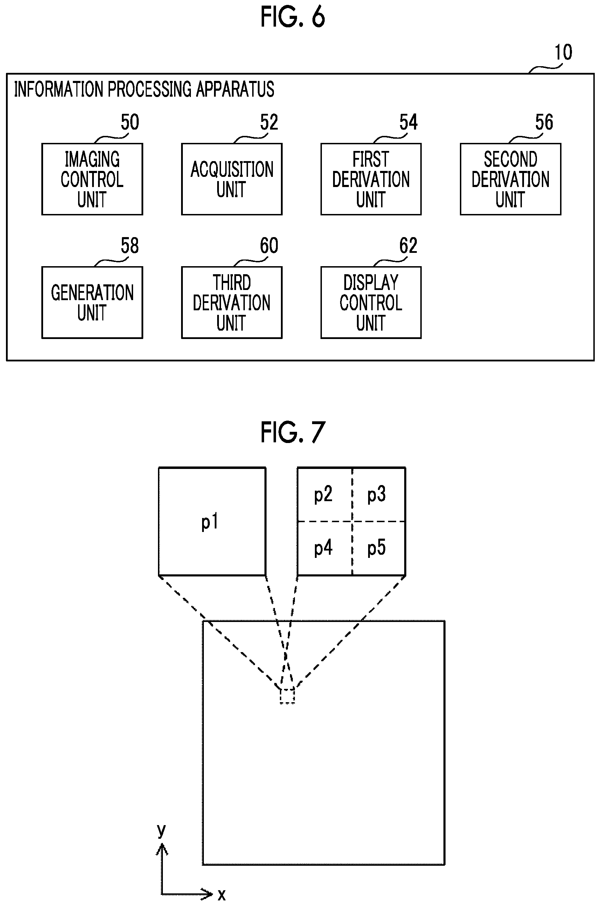

Next, a functional configuration of the information processing apparatus 10 according to the present embodiment will be described with reference to Fig. 6. As shown in Fig. 6, the information processing apparatus 10 includes an imaging control unit 50, an acquisition unit 52, a first derivation unit 54, a second derivation unit 56, a generation unit 58, a third derivation unit 60, and a display control unit 62. The CPU 20 executes the information processing program 30 to function as the imaging control unit 50, the acquisition unit 52, the first derivation unit 54, the second derivation unit 56, the generation unit 58, the third derivation unit 60, and the display control unit 62.

The imaging control unit 50 performs control of causing the camera 40 to read the color forming member 90, that is, to image the color forming member 90. A type for reading the color forming member 90 by the camera 40 is a non-contact type in which the color forming member 90 is read in a state where the camera 40 is not in contact with the color forming member 90. A scanner may be used instead of the camera 40. In this case, the imaging control unit 50 performs control of causing the scanner to read the color forming member 90. A type for reading the color forming member 90 by the scanner is a contact type in which the scanner reads the color forming member 90 in a state where a placement surface of the scanner is in contact with the color forming member 90.

In the present embodiment, the imaging control unit 50 performs control of causing the camera 40 to read a color density of the color forming member 90. The imaging control unit 50 may perform control of causing the camera 40 to read a tint of the color forming member 90, or may perform control of causing the camera 40 to read both the color density and the tint of the color forming member 90.

The acquisition unit 52 acquires, from the camera 40, the image (hereinafter referred to as "color forming member image") obtained by imaging the color forming member 90 under the control of the imaging control unit 50. The color forming member image is an image of the density distribution according to the integrated value of the pressure applied during the pressurization period.

Further, the acquisition unit 52 acquires the electric signals output from the tactile sensor 80 at the plurality of points in time in the pressurization period. That is, the acquisition unit 52 acquires the time-series data of the pressure distribution measured by the tactile sensor 80.

The first derivation unit 54 derives the pressure distribution applied to the color forming member 90 by using the characteristic data 32, based on the color forming member image acquired by the acquisition unit 52. Specifically, the first derivation unit 54 converts the density value into the pressure value, by using the characteristic data 32, for each pixel of the color forming member image to derive the pressure distribution. Hereinafter, the pressure distribution obtained by using the color forming member 90 is referred to as "first pressure distribution".

The second derivation unit 56 converts the numerical value, which represents the signal level of the electrical signal acquired by the acquisition unit 52, into the pressure value by using the characteristic data 34. The second derivation unit 56 performs the conversion for each electric signal, which is detected by each sensor element, at each of the plurality of points in time in the pressurization period. Accordingly, the second derivation unit 56 derives the pressure distribution. Hereinafter, the pressure distribution obtained by using the tactile sensor 80 is referred to as "second pressure distribution". Since the second pressure distribution is derived for each of the plurality of points in time in the pressurization period, the second pressure distribution is the time-series data.

The generation unit 58 generates the time-series data of one pressure distribution (hereinafter referred to as "third pressure distribution") using the time-series data of the first pressure distribution and the second pressure distribution. The processing of generating the time-series data is an example of predetermined processing performed by using the time-series data of the first pressure distribution and the second pressure distribution.

Specifically, the generation unit 58 integrates the time-series data of the second pressure distribution to derive the integrated value of the second pressure distribution. Next, the generation unit 58 corrects the second pressure distribution at each point in time of the time-series data of the second pressure distribution, according to a relationship between the derived integrated value of the second pressure distribution and the first pressure distribution, to generate the time-series data of the third pressure distribution.

More specifically, the generation unit 58 performs registration of the integrated value of the second pressure distribution and the first pressure distribution and then divides the pressure value of the first pressure distribution by the integrated value of the second pressure distribution at the same coordinates to calculate a correction coefficient. The coordinates referred to here mean coordinates in a case where the first pressure distribution and the second pressure distribution are represented by an orthogonal coordinate system on a plane. The generation unit 58 calculates the correction coefficient for each coordinate. The generation unit 58 multiplies the pressure value of each coordinate of the second pressure distribution at each point in time of the time-series data of the second pressure distribution by the correction coefficient calculated for the coordinate to correct the pressure value of the second pressure distribution. With the correction, the time-series data of the third pressure distribution is generated. Since the time-series data of the third pressure distribution is corrected by using the first pressure distribution with high accuracy compared with the second pressure distribution, the time-series data of the third pressure distribution is more accurate than the time-series data of the second pressure distribution.

As described above, the resolution of the color forming member 90 is higher than the surface resolution of the tactile sensor 80. Thus, as shown in Fig. 7 as an example, even at a position having the same coordinates as the second pressure distribution, the first pressure distribution may include pressure values at a plurality of positions. In the example of Fig. 7, p1 represents the pressure value at the coordinates of the second pressure distribution, and p2 to p5 represent the pressure values of the first pressure distribution at the same coordinates. That is, the example of Fig. 7 shows an example in which the resolution of the color forming member 90 is four times the surface resolution of the tactile sensor 80. In this case, in a case where the correction coefficient is calculated, the generation unit 58 may use an average value of the pressure values at the plurality of positions for the first pressure distribution.

Further, the generation unit 58 may calculate the correction coefficient using each pressure value of the first pressure distribution. In this case, the generation unit 58 calculates, for the pressure value at one position of the second pressure distribution, the correction coefficient of each of the plurality of positions obtained by dividing the position. In this case, the generation unit 58 multiplies the pressure value at the one position of the second pressure distribution by the correction coefficient of each of the plurality of positions obtained by dividing the position to correct the pressure value of the second pressure distribution. In this case, the surface resolution of the tactile sensor 80 is corrected to match the resolution of the color forming member 90.

Further, the electric signal output from each sensor element of the tactile sensor 80 may vary depending on which position on a detection surface of the pressure of each sensor element the pressure is applied. Hereinafter, the variation is referred to as "surface variation". The generation unit 58 may estimate which position of the detection surface the pressure is applied to, according to the variation in the pressure values at the plurality of positions of the first pressure distribution corresponding to the one position of the second pressure distribution, and may correct the pressure values of the first pressure distribution according to the estimation result. For example, the generation unit 58 corrects the pressure value of the first pressure distribution to a pressure value in a case where the pressure is assumed to be applied to a position at a center of the detection surface. Accordingly, the surface variation of the applied pressure is corrected.

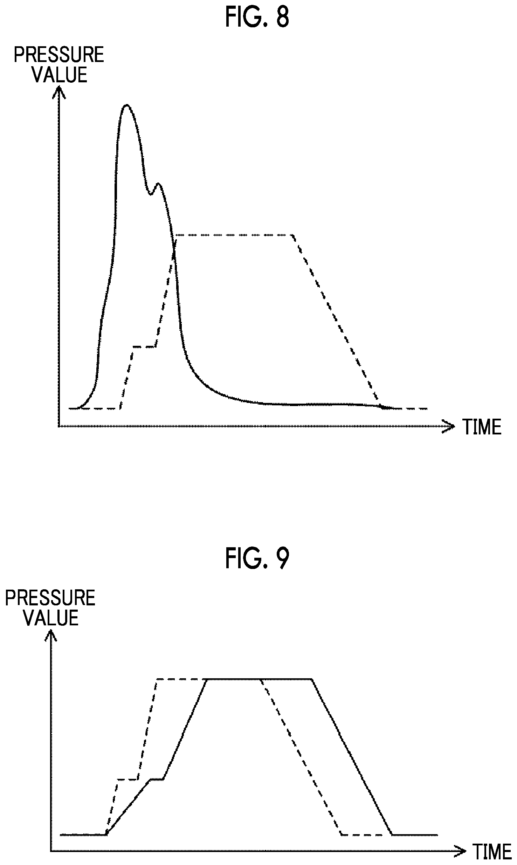

The third derivation unit 60 derives a new input profile that brings the time-series data of the third pressure distribution closer to the input profile 36, based on a difference between the time-series data of the third pressure distribution and the input profile 36. A specific example of a derivation process of the new input profile by the third derivation unit 60 will be described with reference to Figs. 8 and 9. A solid line in Fig. 8 represents the time-series data of the third pressure distribution, and a broken line represents the input profile 36. A broken line in Fig. 9 represents the input profile 36, and a solid line represents the new input profile.

As shown in Fig. 8, the input profile 36 is assumed to be time-series data of the pressure value in which the pressure value is gradually increased, is maintained after a specific pressure value is reached, and then is gradually decreased. In the time-series data of the third pressure distribution derived in a case where the pressure is applied to the object in accordance with the input profile 36, the pressure value rises at an early timing compared with the input profile 36, a peak value of the pressure value is larger than the specific pressure value, and a timing at which the pressure value decreases is also early compared with the input profile 36.

In this case, as shown in Fig. 9 as an example, the third derivation unit 60 derives, as the new input profile, an input profile in which a timing at which the pressure value starts to increase and the specific pressure value are the same as those of the input profile 36 and a timing at which the specific pressure value is reached is delayed. Accordingly, it is considered that the peak value of the pressure value is small and the timing at which the peak of the pressure value is reached is delayed in the time-series data of the third pressure distribution. In this case, for example, the third derivation unit 60 may derive, as the new input profile, an input profile in which the specific pressure value is set as a pressure value smaller than the pressure value of the input profile 36 and a period during which the specific pressure value is maintained is set as a period longer than the period of the input profile 36.

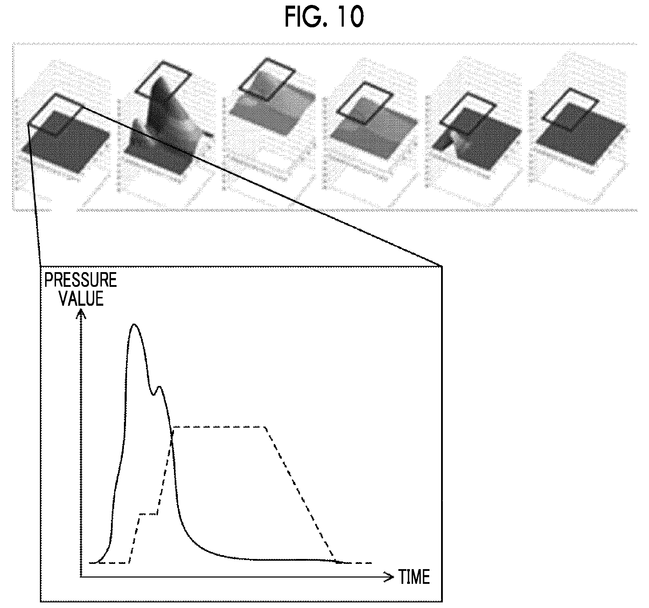

The display control unit 62 performs control of displaying the time-series data of the third pressure distribution, which is generated by the generation unit 58, on the display 23. Specifically, as shown in Fig. 10, the display control unit 62 performs the control of displaying, on the display 23, the third pressure distribution at each point in time of the time-series data of the third pressure distribution, which is generated by the generation unit 58, by a three-dimensional graph. Fig. 10 shows an example of displaying the three-dimensional graph of the third pressure distribution in time series from left to right.

As indicated by a solid rectangle in Fig. 10, the display control unit 62 may perform control of displaying, on the display 23, the time-series data of the third pressure distribution at a specific position by a two-dimensional graph. The specific position in this case may be designated by a user. Further, as indicated by a broken line in the two-dimensional graph of Fig. 10, the display control unit 62 may further perform control of displaying the input profile 36 on the display 23. Further, the display control unit 62 may perform control of displaying the new input profile, which is derived by the third derivation unit 60, on the display 23.

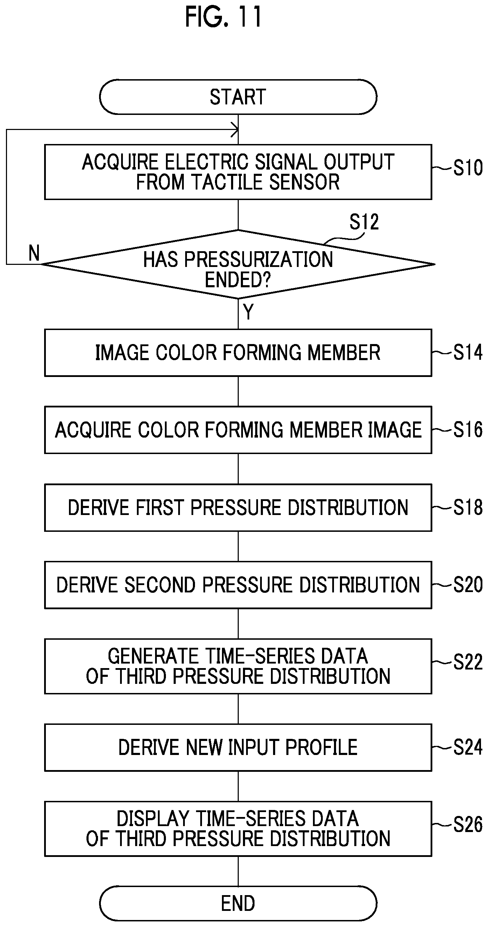

Next, an action of the information processing apparatus 10 according to the present embodiment will be described with reference to Fig. 11. The CPU 20 executes the information processing program 30 to execute pressure measurement processing shown in Fig. 11. The pressure measurement processing shown in Fig. 11 is executed, for example, in a case where an instruction to start the execution is input by the user via the input device 24.

In step S10 of Fig. 11, the acquisition unit 52 acquires the electric signal output from the tactile sensor 80. In step S12, the acquisition unit 52 determines whether or not the pressurization period has ended. In a case where negative determination is made, the processing returns to step S10. In a case where positive determination is made, the processing transitions to step S14. A method of determining the end of the pressurization period by the acquisition unit 52 is not particularly limited. For example, the acquisition unit 52 may determine that the pressurization period has ended at a timing at which a certain period of time has elapsed from the start of the pressurization, or may determine that the pressurization period has ended in a case where a period during which the numerical value, which represents the signal level of the electrical signal output from the tactile sensor 80, is substantially zero continues for a certain period of time. With repeat execution of step S10, the electric signals output from the tactile sensor 80 at the plurality of points in time in the pressurization period are acquired.

In step S14, the imaging control unit 50 performs the control of causing the camera 40 to image the color forming member 90. In step S16, the acquisition unit 52 acquires, from the camera 40, the color forming member image obtained by imaging the color forming member 90 under the control in step S14. In step S18, the first derivation unit 54 derives the first pressure distribution applied to the color forming member 90 by using the characteristic data 32, based on the color forming member image acquired in step S16.

In step S20, the second derivation unit 56 converts the numerical value, which represents the signal level of the electrical signal acquired in step S10, into the pressure value using the characteristic data 34 to derive the second pressure distribution. The second derivation unit 56 performs the derivation process of the second pressure distribution on the electric signals output from the tactile sensor 80 at the plurality of points in time.

In step S22, the generation unit 58 generates the time-series data of the third pressure distribution, using the time-series data of the first pressure distribution derived in step S18 and the time-series data of the second pressure distribution derived in step S20. In step S24, the third derivation unit 60 derives the new input profile that brings the time-series data of the third pressure distribution closer to the input profile 36, based on the difference between the time-series data of the third pressure distribution, which is generated in step S22, and the input profile 36.

In step S26, the display control unit 62 performs the control of displaying, on the display 23, the time-series data of the third pressure distribution generated in step S22. In a case where the processing of step S26 ends, the pressure measurement processing ends.

As described above, according to the present embodiment, it is possible to effectively use information on the amount of energy applied to the object.

In the above embodiment, the case has been described in which the tactile sensor is employed as the sensor device that outputs the electric signal according to the applied pressure, but the present invention is not limited thereto. For example, a load cell, a strain gauge, or a force sensor may be employed as the sensor device. Further, a form may be employed in which two or more of the load cell, the strain gauge, the force sensor, and the tactile sensor are employed as the sensor device.

Further, in the above embodiment, a case has been described in which the pressure is employed as the energy applied to the object, but the present disclosure is not limited thereto. For example, a form may be employed in which heat or ultraviolet rays are employed as the energy applied to the object. In a case where the heat is employed as the energy applied to the object, THERMOSCALE (product name) (manufactured by FUJIFILM Corporation) that forms a color according to an amount of heat can be used as the color forming member 90. Further, in this case, a temperature sensor that outputs an electric signal according to a level of temperature can be used as the sensor device. Further, in a case where the ultraviolet rays are employed as the energy applied to the object, UVSCALE (product name) (manufactured by FUJIFILM Corporation) that forms a color according to an amount of ultraviolet rays can be used as the color forming member 90. Further, in this case, an ultraviolet sensor that outputs an electric signal according to magnitude of an ultraviolet light amount can be used as the sensor device.

Further, in the above embodiment, a form may be employed in which a plurality of types of amounts of energy among the pressure, the heat, and the ultraviolet rays are measured.

Further, in the above embodiment, a case has been described in which the generation unit 58 corrects the second pressure distribution at each point in time of the time-series data of the second pressure distribution, according to the relationship between the integrated value of the second pressure distribution and the first pressure distribution, to generate the time-series data of the third pressure distribution, but the present disclosure is not limited thereto. For example, a form may be employed in which the generation unit 58 corrects the first pressure distribution using the second pressure distribution at each point in time of the time-series data of the second pressure distribution to generate the time-series data of the third pressure distribution.

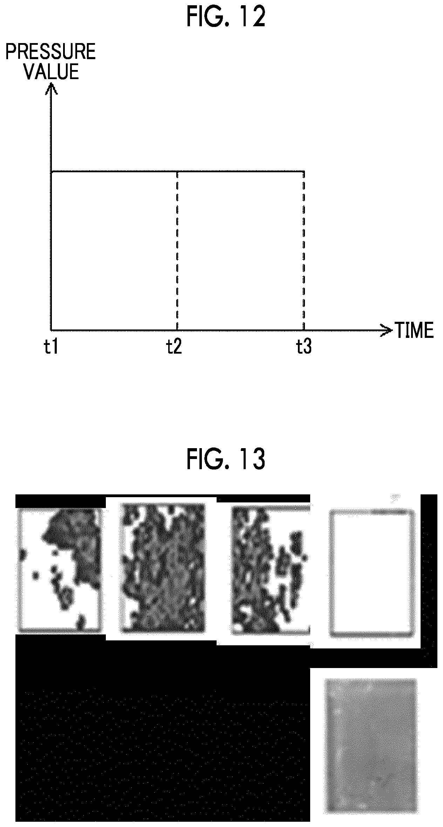

Specifically, the generation unit 58 corrects the pressure value of the first pressure distribution, based on a relative degree of change in the pressure value of the second pressure distribution at each point in time of the time-series data of the second pressure distribution to generate the time-series data of the third pressure distribution. Here, as a specific example, an example will be described in which the third pressure distribution at three points in time of a start point in time t1, an intermediate point in time t2, and an end point in time t3 of the pressurization period. As shown in Fig. 12 as an example, the pressure values at the specific positions of the second pressure distribution are assumed to be constant at t1, t2, and t3, that is, are assumed to be relatively unchanged. In this case, the pressure value of the first pressure distribution at the same position is assumed to be N, that is, the pressure value at the end time point t3 is assumed to be N. As described above, this N is the integrated value of the pressure values in the pressurization period. In this case, the generation unit 58 can derive that the pressure value applied at any point in time of t1, t2, or t3 is N/3. The generation unit 58 may generate the time-series data of the third pressure distribution in this manner.

Further, in the above embodiment, as shown in Fig. 13 as an example, the display control unit 62 may perform the control of displaying, on the display 23, the time-series data of the first pressure distribution and the second pressure distribution. In the example of Fig. 13, an upper part represents the time-series data of the second pressure distribution, and a lower part represents the first pressure distribution (color forming member image in the example of Fig. 13). The control of displaying, on the display 23, the time-series data of the first pressure distribution and the second pressure distribution in this case is an example of predetermined processing performed by using the time-series data of the first pressure distribution and the second pressure distribution.

Further, in the above embodiment, the display control unit 62 may perform control of performing abnormality determination processing using the time-series data of the third pressure distribution and displaying a warning message on the display 23 in a case where abnormality is determined to be present to issue notification of warning. In this case, for example, the display control unit 62 may determine whether or not the abnormality is present depending on whether or not a deviation amount between the time-series data of the third pressure distribution and the input profile 36 is equal to or larger than a threshold value. Further, for example, the display control unit 62 may determine whether or not the abnormality is present depending on whether or not a deviation amount between the time-series data of the third pressure distribution and a reference value is equal to or larger than a threshold value. The reference value in this case may be a value determined as a specification value of a product of the color forming member 90, or may be a statistical value of actual measurement values in the past. Further, in this case, the display control unit 62 may perform the abnormality determination using the time-series data of the second pressure distribution, instead of the time-series data of the third pressure distribution.

In the embodiment, for example, the following various processors can be used as a hardware structure of a processing unit that executes various types of processing, such as each functional unit of the information processing apparatus 10. The various processors include a programmable logic device (PLD), such as a field programmable gate array (FPGA), which is a processor whose circuit configuration is changeable after manufacturing, a dedicated electric circuit, such as an application specific integrated circuit (ASIC), which is a processor having a circuit configuration exclusively designed to execute specific processing, and the like, in addition to the CPU which is a general-purpose processor that executes software (program) to function as various processing units, as described above.

One processing unit may be configured by using one of the various processors or may be configured by using a combination of two or more processors of the same type or different types (for example, a combination of a plurality of FPGAs or a combination of a CPU and an FPGA). Further, a plurality of processing units may be configured by one processor.

As an example of configuring the plurality of processing units with one processor, first, there is a form in which one processor is configured by a combination of one or more CPUs and software and the processor functions as the plurality of processing units, as represented by computers such as a client and a server. Second, there is a form in which a processor that realizes the functions of the entire system including the plurality of processing units with one integrated circuit (IC) chip is used, as represented by a system-on-chip (SoC) or the like. In this manner, various processing units are configured by using one or more of the above various processors as hardware structures.

Further, more specifically, a circuitry combining circuit elements such as semiconductor elements can be used as the hardware structure of the various processors.

In the present embodiment, a form in which the information processing program 30 is stored (installed) in the storage unit 22 in advance has been described, but the present disclosure is not limited thereto. The information processing program 30 may be provided in a form of being recorded on a recording medium such as a compact disc read only memory (CD-ROM), a digital versatile disc read only memory (DVD-ROM), and a Universal Serial Bus (USB) memory. A form may be employed in which the information processing program 30 may be downloaded from an external device through a network.

The disclosure of JP2022-188553 filed on November 25, 2022 is incorporated in the present specification by reference. All documents, patent applications, and technical standards described in the present specification are incorporated in the present specification by reference to the same extent as in a case where individual documents, patent applications, and technical standards are specifically and individually indicated to be incorporated by reference.

## Claims

1. An information processing apparatus comprising:
at least one processor,
wherein the processor is configured to:
acquire a first energy distribution measured by a first measurement member capable of measuring an integrated value of an amount of energy applied to an object after application of energy to the object is ended;
acquire time-series data of a second energy distribution measured by a second measurement member capable of measuring the amount of energy at a plurality of points in time during a period from a start to an end of the application of the energy to the object; and
perform predetermined processing using the first energy distribution and the time-series data.

2. The information processing apparatus according to claim 1,
wherein the energy is at least one of pressure, heat, or ultraviolet rays.

3. The information processing apparatus according to claim 1,
wherein the first measurement member is a color forming member that forms a color with a density distribution according to the amount of energy applied.

4. The information processing apparatus according to claim 3,
wherein the processor is configured to:
perform control of reading the first measurement member in a contact type or a non-contact type to acquire the first energy distribution.

5. The information processing apparatus according to claim 4,
wherein the processor is configured to:
perform control of reading at least one of a color density or a tint of the first measurement member.

6. The information processing apparatus according to claim 1,
wherein the second measurement member is a sensor device that outputs an electric signal according to the amount of energy applied.

7. The information processing apparatus according to claim 6,
wherein the sensor device is at least one of a load cell, a strain gauge, a force sensor, or a tactile sensor.

8. The information processing apparatus according to claim 7,
wherein the sensor device includes the tactile sensor, and
the amount of energy is measured by the tactile sensor with at least one of a pressure resistance type, a capacitance type, a pressure-sensitive fiber, or a pressure-sensitive rubber type.

9. The information processing apparatus according to claim 8,
wherein the first measurement member is a color forming member that forms a color with a density distribution according to the amount of energy applied, and
a resolution of the color forming member is higher than a surface resolution of the tactile sensor.

10. The information processing apparatus according to claim 1,
wherein the processor is configured to:
perform, as the predetermined processing, processing of generating time-series data of one energy distribution using the first energy distribution and the time-series data.

11. The information processing apparatus according to claim 10,
wherein the processor is configured to:
correct a second energy distribution at each point in time of the time-series data according to a relationship between an integrated value of the time-series data and the first energy distribution to generate the time-series data of the one energy distribution.

12. The information processing apparatus according to claim 10,
wherein the processor is configured to:
correct a second energy distribution at least one point in time of the time-series data according to a relationship between an integrated value of the time-series data and the first energy distribution to generate the time-series data of the one energy distribution.

13. The information processing apparatus according to claim 11,
wherein the processor is configured to:
correct at least one of an amount of energy of the second energy distribution, a surface resolution, or a surface variation of the energy applied.

14. The information processing apparatus according to claim 10,
wherein the processor is configured to:
correct the first energy distribution using a second energy distribution at each point in time of the time-series data to generate the time-series data of the one energy distribution.

15. The information processing apparatus according to claim 10,
wherein the processor is configured to:
correct the first energy distribution using the second energy distribution at least one point in time of the time-series data to generate the time-series data of the one energy distribution.

16. The information processing apparatus according to claim 1,
wherein the processor is configured to:
perform, as the predetermined processing, control of displaying the first energy distribution and the time-series data on a display.

17. The information processing apparatus according to claim 10,
wherein the processor is configured to:
perform control of displaying the time-series data of the one energy distribution on a display.

18. The information processing apparatus according to claim 17,
wherein the processor is configured to:
further perform control of displaying, on the display, an input profile to an application device that applies energy.

19. The information processing apparatus according to claim 18,
wherein the processor is configured to:
derive a new input profile that brings the time-series data closer to the input profile based on a difference between the time-series data and the input profile.

20. The information processing apparatus according to claim 10,
wherein the processor is configured to:
perform abnormality determination processing using the time-series data of the one energy distribution; and
issue notification of warning in a case where abnormality is determined to be present.

21. An information processing method executed by a processor provided in an information processing apparatus, the method comprising:
acquiring a first energy distribution measured by a first measurement member capable of measuring an integrated value of an amount of energy applied to an object after application of energy to the object is ended;
acquiring time-series data of a second energy distribution measured by a second measurement member capable of measuring the amount of energy at a plurality of points in time during a period from a start to an end of the application of the energy to the object; and
performing predetermined processing using the first energy distribution and the time-series data.

22. An information processing program causing a processor provided in an information processing apparatus to execute:
acquiring a first energy distribution measured by a first measurement member capable of measuring an integrated value of an amount of energy applied to an object after application of energy to the object is ended;
acquiring time-series data of a second energy distribution measured by a second measurement member capable of measuring the amount of energy at a plurality of points in time during a period from a start to an end of the application of the energy to the object; and
performing predetermined processing using the first energy distribution and the time-series data.
